# EUROPÄISCHE PATENTSCHRIFT

(11) **EP 2 414 179 B1**
(45) Veröffentlichungstag und Bekanntmachung des Hinweises auf die Patenterteilung: **03.08.2016**
(21) Anmeldenummer: 10707301.7
(22) Anmeldetag: 10.03.2010
(51) Int. Cl.: B60C 11/16

(54) **SPIKEHALTERUNG UND VERFAHREN ZU DEREN HERSTELLUNG**
SPIKE HOLDER AND METHOD FOR THE PRODUCTION THEREOF
PORTE-CRAMPON ET PROCÉDÉ POUR SA FABRICATION

(30) Priorität: 03.04.2009 DE 102009016065
(43) Veröffentlichungstag der Anmeldung: 08.02.2012
(73) Patentinhaber: SITEK-Spikes GmbH & Co. KG, 78733 Aichhalden (DE)
(72) Erfinder: ROTH, Stefan, 78733 Aichhalden (DE); KRAHL, Rainer, 78733 Aichhalden (DE); TOTZKI, Claus, 78713 Schramberg (DE)
(74) Vertreter: Herrmann, Jochen
(86) Internationale Anmeldenummer: PCT/EP2010/053027
(87) Internationale Veröffentlichungsnummer: WO 2010/112308

(56) Entgegenhaltungen:
- DE-A1- 1 505 104
- FR-A1- 2 775 934
- US-A- 4 838 329

## Beschreibung

Die Erfindung betrifft eine Spikeanordnung, die ein in eine Einbettungsöffnung einer Lauffläche, insbesondere eines Reifens, einbringbares Halteelement aufweist, das eine Aufnahme für einen von der Lauffläche des Reifens hervorstehenden Gleitschutzstift bildet.

Weiterhin betrifft die Erfindung ein Verfahren zur Herstellung einer derartigen Spikeanordnung.

Aus dem Stand der Technik sind derartige Gleitschutzstifte, auch Spikes genannt, bekannt, um die Haftung von Reifen auf schnee- oder eisglatter Fahrbahn zu verbessern. Dabei ist allen bekannten Spikeanordnungen gemein, dass im Betrieb, zum Beispiel insbesondere bei einem Lenk- oder Bremsvorgang, ein verschleißfester Teil des Gleitschutzstiftes in den Schnee oder das Eis eindringt und so die Verzahnung des Reifens mit dem Untergrund und damit die übertragbare Kraft deutlich erhöht.

Weiterhin weisen alle Spikeanordnungen Halteelemente oder -bereiche auf, welche meist in Form von Flanschen ausgeführt sind, mit denen der Gleitschutzstift im Gummi des Reifens gehalten ist.

Weiterhin werden derartige Gleitschutzstifte auch bei Schuhen, Hufeisen, Schneeketten und sonstigen vor Rutschgefahr schützenden oder zu schützenden Einrichtungen verwendet.

Zur Montage der Spikeanordnung wird diese in eine Einbettungsöffnung in der Lauffläche des Reifens eingepresst. Der Flansch wird von dem elastischen Reifenmaterial umfasst und arretiert.

Der verschleißfeste Teil und der Haltebereich können aus einem Stück gefertigt werden. Alternativ können zumindest zweiteilige Systeme eingesetzt werden, bei denen ein verschleißfester Stift aus Hartwerkstoff, meist ein Hartmetallstift, in eine Ausnehmung eines Halteelementes eingesetzt wird. Die Verbindung zwischen dem Stift und dem Halteelement erfolgt dabei durch Löten, Kleben oder Pressen. Das Halteelement kann aus einem gut zu bearbeitenden Material mit günstigen Materialeigenschaften wie Stahl oder Sintereisen gefertigt werden.

Nachteilhaft bei den bekannten Spikeanordnungen ist, dass durch die hohen Fliehkräfte, die aufgrund der Rotation des Reifens auf die Fahrbahn übertragen werden, der Fahrbahnbelag in hohem Maße belastet und dadurch beschädigt wird. Eine derartige Beschädigung des Fahrbahnbelags wird insbesondere auch dadurch verstärkt, dass die Gleitschutzstifte relativ starr aus der Abrollfläche des Reifens hervorstehen.

Ein aus Stahl gefertigtes Halteelement wird herkömmlicher Weise in einem Fließpressvorgang oder durch Schmieden hergestellt. Dabei lassen sich nur einfache Formen ausbilden.

Aus Dokument FR 2 775 934 A1 ist ein Magnesium - Komposit-Spike mit einem Halteelement aus Kunststoff bekannt. Ferner sind metallene Halteelemente aus DE 15 05 104 A1 bekannt.

Es ist nun Aufgabe der Erfindung, eine Spikeanordnung anzugeben, die gegenüber den herkömmlichen Spikeanordnungen deutlich Straßen schonender ist. Darüber hinaus soll auch ein besonders einfaches Herstellungsverfahren für eine derartige Spikeanordnung angegeben werden.

Diese Aufgabe der Erfindung wird vorrichtungstechnisch durch eine Spikeanordnung gemäß den Merkmalen des Patentanspruchs 1 und verfahrenstechnisch durch ein Herstellungsverfahren gemäß den Merkmalen des Patentanspruchs 11 gelöst. Vorteilhafte Weiterbildungen sind jeweils in den Unteransprüchen beschrieben.

Demgemäß besteht das Halteelement zumindest teilweise aus Magnesium oder einer Magnesiumlegierung und kann die Aufnahme für den Gleitschutzstift bilden. Magnesium ist ein festes Leichtmetall, das etwa noch ein Drittel leichter als Aluminium ist.

Da aus Magnesium oder einer Magnesiumlegierung gefertigte Haltelement, insbesondere auch gegenüber herkömmlichen Halteelementen aus Stahl ein deutlich geringeres Gewicht aufweisen, sind die Fliehkräfte bei der Rotation der Reifen stark reduziert, wodurch ein Fahrbahnbelag schonender Betrieb möglich ist.

Zudem ist auch das Gewicht eines mit den erfindungsgemäßen Spikeanordnungen bestückten Reifens gegenüber einem Reifen, der mit Spikes aus Stahl versehen ist, deutlich geringer, was letztendlich auch zu einem geringeren Verbrauch an Kraftstoff führen kann.

Wenn gefordert ist, dass das Gesamtgewicht des Reifens bei der Verwendung von aus Magnesium oder einer Magnesiumlegierung gefertigten Halteelementen gegenüber herkömmlichen Spikes aus Stahl gleich bleiben soll, dann können bei gleichem Gesamtgewicht komplexere Geometrien aus Magnesium oder einer Magnesiumlegierung gefertigt werden, die wiederum einen verbesserten Griff auf Schnee und Eis bieten können.

Insbesondere können bei gleichem Gewicht größere Bauteilformen verwirklicht werden. Mit der Verwendung des Magnesiumwerkstoffes lassen sich insbesondere auch Geometrien ausgestalten, die eine verbesserte Seitenführung und oder ein verbessertes Beschleunigungs- bzw. Bremsverhalten ermöglichen. Weiterhin ist es möglich, einen optimierten Systemverschleiß der gesamten Spikeanordnung zu erreichen. Dabei sind der Einzelverschleiß des Gleitschutzstiftes, des Halteteils und des Reifens aufeinander derart abstimmbar, dass eine gleichmäßige Abnutzung möglich wird. Wenn sich aber sämtliche Spikeanordnungen eines Reifens gleichmäßig abnutzen, so bleibt die Reifenwuchtung aufrecht erhalten.

Um einen sicheren Halt des Gleitschutzstifts im Halteelement und somit am Reifen zu gewährleisten, kann es vorgesehen sein, dass der Gleitschutzstift formschlüssig in der Aufnahme des Halteelementes gehalten ist. Die formschlüssige Verankerung verhindert zuverlässig ein Verlieren des Gleitschutzstiftes. Diese formschlüssige Verbindung ist fertigungstechnisch dann besonders einfach herzustellen, wenn vorgesehen ist, dass der Gleitschutzstift zumindest eine Hinterschneidung aufweist, die von einer, die Aufnahme umgebenden Ummantelung des Halteelements gehalten ist.

Damit wird zudem wirkungsvoll ein Verschieben des Gleitschutzstifts in dessen Erstreckungsrichtung verhindert. Eine derartige Hinterschneidung kann am Gleitschutzstift als sichere Verankerung innerhalb der Aufnahme des Halteelements dienen.

Erfindungsgemäß kann auch vorgesehen sein, dass das Halteelement bereichsweise eine Umspritzung aus Kunststoff aufweist.

Die Umspritzung aus Kunststoff bietet die Möglichkeit eine Vielzahl von Formgebungen leicht zu realisieren und weitere Funktionen in das Halteelement zu integrieren. Zudem sind die derartig hergestellten Halteelemente besonders leicht und können auch verschleißoptimiert konstengünstig ausgebildet sein.

Eine bevorzugte Erfindungsvariante ist dergestalt, dass der Gleitschutzstift schwenkbar in der Aufnahme gehalten ist. Mit einer derartigen Drehlagerung bzw. schwimmenden Lagerung kann dabei erreicht werden, dass sich der Gleitschutzstift je nach Beschaffenheit des Fahrbahnbelags etwas verschwenkt und somit ein Fahrbahn schonender Betrieb und auch ein optimaler Griff auf Eis und Schnee möglich ist.

In einer Ausführungsform der Erfindung kann der Gleitschutzstift einen im wesentlichen zylindrischen Grundkörper aufweisen, an dessen in die Aufnahme hineinreichenden Endes eine etwa kugelförmige Verdickung einstückig mit dem Grundkörper angeformt ist, wobei am Übergang der kugelförmige Verdickung zum Grundkörper die Hinterschneidung ausgebildet ist. Mit dieser Formgebung ist eine besonders sichere Verankerung des Gleitschutzstifts im Halteteil realisiert.

In besonders vorteilhafter Weise kann der Gleitschutzstift innerhalb der Aufnahme des Halteelements um die kugelförmige Verdickung herum verschwenkbar gelagert sein.

Ein besonders weites Verschwenken des Gleitschutzstifts kann dadurch erreicht werden, dass der Gleitschutzstift zumindest bereichsweise von der Innenwandung der Aufnahme beabstandet ist.

Ein sicherer Halt des Halteelements am Reifen kann dadurch erreicht werden, dass an dem in die Lauffläche des Reifens einbringbaren Ende des Halteelements ein vorstehender Verankerungsfuß ausgebildet ist, der fest im Reifen verankert werden kann.

Gemäß dem erfindungsgemäßen Verfahren lässt sich die erfindungsgemäße Spikeanordnung folgendermaßen herstellen: Ein Gleitschutzstift wird aus einem Hartwerkstoff, beispielsweise aus Hartmetall hergestellt. Dieser Gleitschutzstift wird als Einlegeteil in eine Spritzgussform eingebracht, in welcher der Gleitschutzstift mit Magnesium oder einer Magnesiumlegierung umformt wird. Dieses Herstellungsverfahren zeichnet sich durch eine besonders einfache Handhabung aus.
Das Halteelement kann dabei als Druckgussteil aus Magnesium oder einer Magnesiumlegierung hergestellt werden. Im Druckguss können ebenfalls Hinterschnitte am Halteelement hergestellt werden.

Alternativ kann das Halteelement aus Magnesium oder einer Magnesiumlegierung im Thixoverfahren hergestellt werden. Dieses auch als Thixoforming oder Thixomoulding bekannte Verfahren vereint die Vorteile des Gießens und des Schmiedens. Das zu verarbeitende Magnesium bzw. die Legierung wird bis zur Übergangstemperatur zwischen fest und flüssig erhitzt und im Spritzgussverfahren verarbeitet. Im thixotropen Zustand verringert sich die Viskosität des Materials. Das knetmasseartige Metall lässt sich so mit geringem Druck sehr präzise in Formen pressen. Im Gegensatz zum Druckguss sind beim Thixoverfahren Zykluszeit, Materialeinsatz und Fließwege reduziert und die Bauteilqualität und Eigenschaften werden verbessert. Die gefertigten Teile zeichnen sich durch geringere Schwindung bei gleichzeitig höherer Zähigkeit aus. Vergleichbare Eigenschaften lassen sich zwar durch Schmieden erzielen, wobei sich damit jedoch nur vergleichsweise groben Formen herstellen lassen.

Eine denkbare Erfindungsvariante ist dergestalt, dass an das Halteelement ein Kunststoffspritzteil angespritzt oder angebracht wird.

Die Erfindung wird nachfolgend anhand eines in der Zeichnung dargestellten Ausführungsbeispiels näher erläutert.

Die einzige Figur zeigt in schematischer und geschnittener Seitenansicht eine Spikeanordnung, die ein in eine Einbettungsöffnung einer Lauffläche 10 eines Reifens eingebrachtes und dort verankertes Halteelement 12 aufweist. Zu diesem Zweck ist an dem in die Lauffläche 10 des Reifens einbringbaren Ende 28 des Halteelements 12 ein vorstehender Verankerungsfuß 30 ausgebildet.

Das Halteelement 12 bildet eine Aufnahme 14 für einen von der Lauffläche 10 des Reifens hervorstehenden Gleitschutzstift 16.

Der Gleitschutzstift 16 besteht aus einem Hartwerkstoff, beispielsweise Hartmetall und weist einen im wesentlichen zylindrischen Grundkörper 22 auf, an dessen in die Aufnahme 14 hineinreichenden Endes 24 eine etwa kugelförmige Verdickung 26 einstückig mit dem Grundkörper 22 angeformt ist.

Am Übergang der kugelförmigen Verdickung 26 zum Grundkörper 22 ist eine Hinterschneidung 18 ausgebildet, die von der Umspritzung 20 aus einer Magnesiumlegierung umgeben ist, welche das Halteteil 12 bildet.

Der Gleitschutzstift 16 ist innerhalb der Aufnahme 14 des Halteelements 12 um die kugelförmige Verdickung 26 herum in die Richtungen des Doppelpfeils S verschwenkbar gelagert, wobei der Gleitschutzstift 16 von der Innenwandung der Aufnahme 14 beabstandet ist.

Die gezeigt Spikeanordnung wird dadurch hergestellt, dass das Halteteil 12 als Druckgussteil aus Magnesium oder einer Magnesiumlegierung geformt wird. Hierbei wird der Gleitschutzstift 16 in eine (nicht gezeigte) Spritzgussform als Einlegeteil eingebracht und mit Magnesium oder einer Magnesiumlegierung im Thixoverfahren umspritzt, um das Halteteil 12 auszubilden.

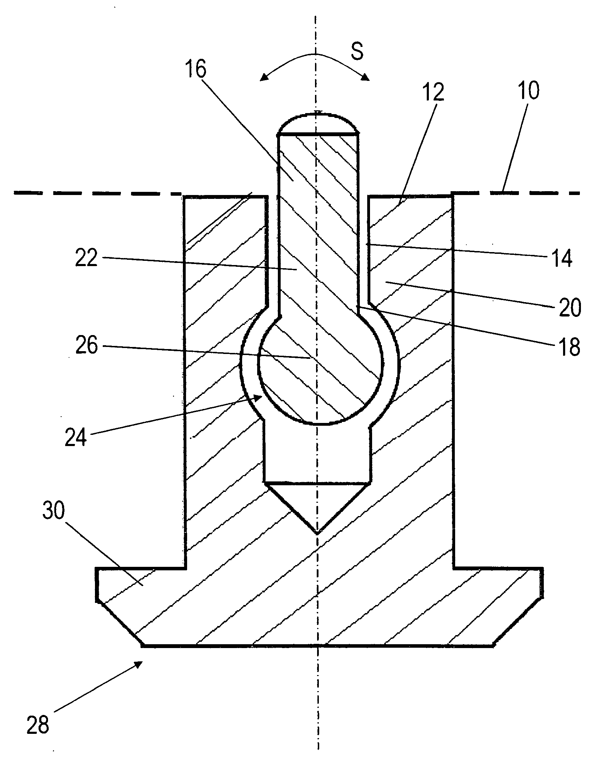

Mit dem beschrieben Verfahren lassen sich neben der in der Figur 1 gezeigten Formgebung nahezu beliebige Formen aus Magnesium bei besonders hoher Qualität und Formstabilität und bei besonders großer Maßhaltigkeit erzeugen.

## Patentansprüche

1. Spikeanordnung, die ein in eine Einbettungsöffnung einer Lauffläche (10), Insbesondere eines Reifens, einbringbares Halteelement (12) aufweist, das eine Aufnahme (14) bildet, in der ein Gleitschutzstift (16) aus einem Hartwerkstoff aufgenommen ist, wobei an dem in die Lauffläche (10) des Reifens einbringbaren Ende (28) des Halteelements (12) ein vorstehender Verankerungsfuß (30) ausgebildet ist,
**dadurch gekennzeichnet,**
**dass** das Halteelement (12) aus Magnesium oder einer Magnesiumlegierung besteht.

2. Anordnung nach Anspruch 1,
**dadurch gekennzeichnet,**
**dass** der Gleitschutzstift (16) formschlüssig in der Aufnahme (14) des Halteelements (12) gehalten ist.

3. Anordnung nach Anspruch 2,
**dadurch gekennzeichnet,**
**dass** der Gleitschutzstift (16) zumindest eine Hinterschneidung (18) aufweist, die von einer, die Aufnahme (14) umgebenden Ummantelung des Halteelements (12) gehalten ist.

4. Spikeanordnung nach einem der Ansprüche 1 bis 3,
**dadurch gekennzeichnet, dass** auf das Halteelement (12) bereichsweise eine Umspritzung aus Kunststoff aufgebracht ist.

5. Spikeanordnung nach einem der Ansprüche 1 bis 4,
**dadurch gekennzeichnet,**
**dass** der Gleitschutzstift (16) schwenkbar in der Aufnahme (14) gehalten ist

6. Spikeanordnung nach Anspruch 5,
**dadurch gekennzeichnet,**
**dass** von dem Gleitschutzstift (16) und der Aufnahme (14) eine Schwenklagerung gebildet ist.

7. Anordnung nach einem der Ansprüche 1 bis 6,
**dadurch gekennzeichnet,**
**dass** der Gleitschutzstift (16) einen im wesentlichen zylindrischen Grundkörper (22) aufweist, an dessen in die Aufnahme (14) hinreichenden Endes (24) eine kugelförmige Verdickung (26) einstückig mit dem Grundkörper (22) angeformt ist, wobei am Übergang der kugelförmige Verdickung (26) zum Grundkörper (22) die Hinterschneidung (18) ausgebildet ist.

8. Anordnung nach Anspruch 7,
**dadurch gekennzeichnet,**
**dass** der Gleitschutzstift (16) innerhalb der Aufnahme (14) des Halteelements (12) um die kugelförmige Verdickung (26) herum verschwenkbar (Pfeil S) gelagert ist.

9. Anordnung nach einem der Ansprüche 1 bis 8,
**dadurch gekennzeichnet,**
**dass** der Gleitschutzstift (16) zumindest bereichsweise von der Innenwandung der Aufnahme (14) beabstandet ist.

10. Verfahren zur Herstellung einer Spikeanordnung, die ein in eine
Einbettungsöffnung einer Lauffläche (10), eines Reifens, einbringbares Halteelement (12) aufweiset, das eine Aufnahme (14) für einen Gleitschutzstift (16) bildet, wobei an dem in die Lauffläche (10) des Reifens einbringbaren Ende (28) des Halteelements (12) ein vorstehender Verankerungsfuß (30) ausgebildet ist, und wobei das Verfahren folgende Schritte aufweist:
- Herstellen eines Gleitschutzstifts (16) aus Hartwerkstoff,
- Einbringen des Gleitschutzstifts (16) in eine Werkzeugform,
- Umformen des Gleitschutzstifts (16) mit Magnesium oder einer Magnesiumlegierung zur Ausbildung des Halteelements (12).

11. Verfahren nach Anspruch 10,
**dadurch gekennzeichnet,**
**dass** das Halteelement (12) als Druckgussteil aus Magnesium oder einer Magnesiumlegierung hergestellt wird.

12. Verfahren nach Anspruch 10 oder 11,
**dadurch gekennzeichnet,**
**dass** das Halteelement (12) aus Magnesium oder einer Magnesiumlegierung im Thioxoverfahren hergestellt wird.

13. Verfahren nach einem der Ansprüche 10 bis 12,
**dadurch gekennzeichnet,**
**dass** an das Halteelement (12) ein Kunststoffspritzteil angespritzt oder angebracht wird.

## Claims

1. A spike arrangement, which has a holder element (12) that can be inserted into an embedding opening of a running surface (10), in particular of a tire, that forms a receptacle (14), in which an anti-skid protection spike (16) made of a hard material is received, wherein on the end (28) of the holder element (12), which can be inserted into the running surface (10) of the tire, a protruding anchoring foot (30) is formed,
**characterized in**
**that** the holder element (12) consists of magnesium or a magnesium alloy.

2. An arrangement according to Claim 1,
**characterized in**
**that** the anti-skid protection spike (16) is held positively in the receptacle (14) of the holder element (12).

3. An arrangement according to Claim 2,
**characterized in**
**that** the anti-skid protection spike (16) has at least one undercut (18), which is held by a shell of the holder element (12) surrounding the receptacle (14).

4. A spike arrangement according to any one of claims 1 to 3,
**characterized in**
**that** an overmold made of plastic is applied area by area to the holder element (12).

5. A spike arrangement according to any one of claims 1 to 4,
**characterized in**
**that** the anti-skid protection spike (16) is held pivotably in the receptacle (14).

6. A spike arrangement according to Claim 5,
**characterized in**
**that** a pivot bearing is formed by the anti-skid protection spike (16) and the receptacle (14).

7. A spike arrangement according to any one of claims 1 to 6,
**characterized in**
**that** the anti-skid protection spike (16) has a substantially cylindrical base body (22), on the end (24) of which reaching into the receptacle (14) a spherical thickening (26) is integrally formed with the base body (22), wherein the undercut (18) is formed at the transition of the spherical thickening (26) to the base body (22).

8. An arrangement according to Claim 7,
**characterized in**
**that** the anti-skid protection spike (16) is pivot mounted (arrow S) within the receptacle (14) of the holder element (12) around the spherical thickening (26).

9. An arrangement according to any one of Claims 1 to 8,
**characterized in**
**that** the anti-skid protection spike (16) is spaced apart at least area by area from the inner wall of the receptacle (14).

10. A method for the production of a spike arrangement, which has a holder element (12) that can be inserted into an embedding opening of a running surface (10) of a tire, which forms a receptacle (14) for an anti-skid protection spike (16), wherein on the end (28) of the holder element (12), which can be inserted into the running surface (10) of the tire, a protruding anchoring foot (30) is formed and wherein the method has the following steps:
- Production of an anti-skid protection spike (16) made of hard material,
- Insertion of the anti-skid protection spike (16) in a tool shape,
- Shaping of the anti-skid protection spike (16) with magnesium or a magnesium alloy for the formation of the holder element (12).

11. A method according to Claim 10,
**characterized in**
**that** the holder element (12) is produced as a die-cast component made of magnesium or a magnesium alloy.

12. A method according to Claim 10 or 11,
**characterized in**
**that** the holder element (12) is produced from magnesium or a magnesium alloy in the thioxo process.

13. A method according to Claim 10 or 12,
**characterized in**
**that** a plastic injection-molded part injection molded or mounted on the holder element (12).

## Revendications

1. Dispositif à crampons, qui comprend un élément de maintien (12) pouvant être inséré dans une ouverture d'insertion d'une surface de roulement (10), plus particulièrement d'un pneu, qui forme un logement (14), dans lequel est logé un crampon antidérapant (16) en matériau dur, un pied d'ancrage (30) en saillie étant prévu au niveau de l'extrémité (28) de l'élément de maintien (12), qui peut être inséré dans la surface de roulement (10) du pneu,
**caractérisé en ce que**
l'élément de maintien (12) est constitué de magnésium ou d'un alliage au magnésium.

2. Dispositif selon la revendication 1,
**caractérisé en ce que** le crampon antidérapant (16) est maintenu par complémentarité de forme dans le logement (14) de l'élément de maintien (12).

3. Dispositif selon la revendication 2,
**caractérisé en ce que** le crampon antidérapant (16) comprend au moins une contre-dépouille (18) qui est maintenue par une enveloppe de l'élément de maintien (12) entourant le logement (14).

4. Dispositif à crampons selon l'une des revendications 1 à 3,
**caractérisé en ce que**, sur l'élément de maintien (12), à certains endroits, un enrobage moulé par injection de matière plastique est appliqué.

5. Dispositif à crampons selon l'une des revendications 1 à 4,
**caractérisé en ce que** le crampon antidérapant (16) est maintenu de manière pivotante dans le logement (14).

6. Dispositif selon la revendication 5,
**caractérisé en ce qu'**un logement pivotant est formé par le crampon antidérapant (16) et le logement (14).

7. Dispositif à crampons selon l'une des revendications 1 à 6,
**caractérisé en ce que** le crampon antidérapant (16) comprend un corps de base (22) essentiellement cylindrique, au niveau duquel, dans l'extrémité (24) atteignant le logement (14), est formé un épaississement sphérique (26) d'une seule pièce avec le corps de base (22), la contre-dépouille (18) étant réalisée au niveau de la transition entre l'épaississement sphérique (26) et le corps de base (22).

8. Dispositif selon la revendication 7,
**caractérisé en ce que** le crampon antidérapant (16) est logé à l'intérieur du logement (14) de l'élément de maintien (12) de manière pivotante autour de l'épaississement sphérique (26) (flèche S).

9. Dispositif selon l'une des revendications 1 à 8,
**caractérisé en ce que** le crampon antidérapant (16) est éloigné, au moins à certains endroits, de la paroi interne du logement (14).

10. Procédé de fabrication d'un dispositif à crampons, qui comprend un élément de maintien (12) pouvant être inséré dans une ouverture d'insertion d'une surface de roulement (10) d'un pneu, qui forme un logement (14) pour un crampon antidérapant (16), un pied d'ancrage (30) en saillie étant prévu au niveau de l'extrémité (28) de l'élément de maintien (12), qui peut être inséré dans la surface de roulement (10) du pneu,et le procédé comprenant les étapes suivantes :
- fabrication d'un crampon antidérapant (16) en matériau dur,
- insertion d'un crampon antidérapant (16) dans une forme d'outil,
- façonnage du crampon antidérapant (16) avec du magnésium ou un alliage de magnésium pour la formation de l'élément de maintien (12).

11. Procédé selon la revendication 10,
**caractérisé en ce que** l'élément de maintien (12) est fabriqué comme une pièce en fonte en magnésium ou en alliage de magnésium.

12. Procédé selon la revendication 10 ou 11,
**caractérisé en ce que** l'élément de maintien (12) est fabriqué en magnésium ou en un alliage de magnésium à l'aide d'un procédé thioxo.

13. Procédé selon l'une des revendications 10 à 12,
**caractérisé en ce que**, sur l'élément de maintien (12) est injectée ou appliquée une pièce en matière plastique injectée.
